# EUROPÄISCHE PATENTSCHRIFT

(11) **EP 1 867 809 B1**
(45) Veröffentlichungstag und Bekanntmachung des Hinweises auf die Patenterteilung: **26.10.2016**
(21) Anmeldenummer: 07104666.8
(22) Anmeldetag: 22.03.2007
(51) Int. Cl.: E05B 17/00, E05C 9/00

(54) **Verfahren zur Herstellung eines winkelförmigen Deckwinkels für ein Beschlagteil**
Method of manufacturing an angular sash angle cover element for fitting element
Procédé de fabrication d'un élément angulaire pour composant de ferrure

(30) Priorität: 13.06.2006 DE 102006000293
(43) Veröffentlichungstag der Anmeldung: 19.12.2007
(73) Patentinhaber: SIEGENIA-AUBI KG, 57234 Wilnsdorf (DE)
(72) Erfinder:

(56) Entgegenhaltungen:
- DE-A1- 19 955 961
- DE-U1-202006 001 247
- FR-A1- 2 809 445
- US-A- 1 670 476

## Beschreibung

Die Erfindung betrifft ein Verfahren nach dem Oberbegriff des Anspruchs 1.

Ein solches Verfahren ist aus der DE 20 2006 001 247 U1 bekannt.

Es ist bereits bekannt, Halbzeuge herzustellen, die zur Weiterverarbeitung und Herstellung von winkelförmigen Beschlagteilen dienen. Im gleichen Maße kann dieses Verfahren auch bei Montagewinkeln angewandt werden. Montage- und Deckwinkel unterscheiden sich hierbei lediglich in der späteren Verwendung als weitgehend verdeckt angebrachter Montagewinkel z.B. eines Eckbandes oder als sichtbar angebrachter Deckwinkel, der eine Beschlagaufnahmenut eines Fensters oder einer Tür abdeckt. So werden die Deckwinkel von Eckumlenkungen zunächst mittels eines Stanz-Biegevorgangs aus einem Flachmaterial aus Stahl hergestellt und anschließend - in gestrecktem Zustand - z. B. galvanisch verzinkt und ggf. mit einer Versiegelung versehen. Die Deckwinkel besitzen auch in der gestreckten Form eine nur geringe Länge bezogen auf die verwendeten Trommeln. Bei der Aufbringung von galvanischen Überzügen wie z.B. der Verzinkung in Trommeln werden die stangenförmigen Bauteile in einen trommelförmigen Käfig gefüllt und mittels dieser Trommeln in verschiedenen Bädern behandelt.

Dabei werden die Trommeln nahezu fortwährend gedreht, so dass die darin befindlichen Bauteile durchmischt werden und gleichmäßig mit den verschiedenen Substanzen der Bäder in Wirkverbindung treten können.

Bei der Behandlung von bereits winkelförmigen Bauteilen tritt das Problem auf, dass diese bei der Drehung der Trommeln ineinander verhaken und zum einen verformt werden und zum anderen einzelne Stellen, an denen die Beschlagteile verhakt sind, nicht oder nur ungenügend mit den Substanzen der Bädern in Berührung kommen. Gleichzeitig können durch das Aneinanderschlagen der Montageschienen und/oder der Deckwinkel Beschädigungen an der Oberfläche in Form von Kratzern entstehen.

Alternativ werden derartige Bauteile aber auch Bauteile, die eine besonders gute Oberfläche benötigen, als sogenannte Gestellware behandelt. Dabei werden die Bauteile jeweils einzeln an einem Gestell befestigt, welches dann den einzelnen Bädern zugeführt wird. Eine Beeinträchtigung der Oberflächen durch Aufeinanderschlagen ist dabei ausgeschlossen. Die Befestigung der Bauteile an dem Gestell stellt allerdings einen erheblichen Kosten- und Zeitaufwand dar. Jedes der Bauteile muss einzeln an dem Gestell befestigt werden.

Die der Erfindung zugrundeliegende Aufgabe besteht in der Vereinfachung der Herstellung der galvanisierten Montageschiene bzw. des Deckwinkels. Dabei soll es unerheblich sein, ob es sich um einen Verzinkungs- oder einen sonstigen Galvanisierungsvorgang mit einem anderen Stoff handelt.

Die Lösung der Aufgabe erfolgt mit einem Verfahren nach Anspruch 1.

Durch die Ausgestaltung des Halbzeugs nach Anspruch 1 wird zum einen die Herstellung des Bauteils an sich verbessert. Durch die Zusammenfassung mehrerer Treibstangen, Montageschienen oder Deckwinkel zu einem einzigen Halbzeug müssen weniger Teile gehandhabt werden. Die Zuführung zu Maschinen und Vorrichtungen lässt sich leichter bewerkstelligen und bei entsprechender Auslegung der Vorrichtung und/oder des Werkzeuges auch beschleunigen. Bei der Beschichtung mittels des galvanischen Verfahrens kann die max. Trommellänge ausgenutzt werden, ohne dass die Gefahr besteht, dass die Halbzeuge innerhalb der Trommel zu sehr verrutschen. Eine gleichmäßigere Beschichtung ist dadurch gewährleistet. Auch hier ist es vorteilhaft, dass eine geringere Anzahl von Bauteilen gehandhabt werden müssen. Wird das Halbzeug in einem Gestell verzinkt, dann besteht hierbei der Vorteil, dass weniger Bauteile gehandhabt werden müssen. Besteht das Halbzeug z.B. aus drei Montageschienen, dann reduziert sich der Handhabungsaufwand bereits um zwei Drittel.

Das Verfahren nutzt die vorstehend beschriebenen Vorteile darüber hinaus auch bis an eine weiterverarbeitende Maschine: das Halbzeug bestehend aus einem Vielfachen der hier noch unverformten Montage- oder Deckwinkel kann einfacher in einer automatischen Anlage zugeführt werden.

In den Zeichnungen sind weitere vorteilhafte Ausgestaltungen erkennbar. Es zeigt:
- Fig. 1: ein Halbzeug, welches drei Deckwinkel einer Eckumlenkung eines Treibstangenbeschlages beinhaltet,
- Fig. 2: einen noch unverformten Deckwinkel,
- Fig. 3: einen Deckwinkel nach einem dritten Arbeitsschritt,
- Fig. 4: ein Ablaufschema zur Herstellung des Deckwinkels.

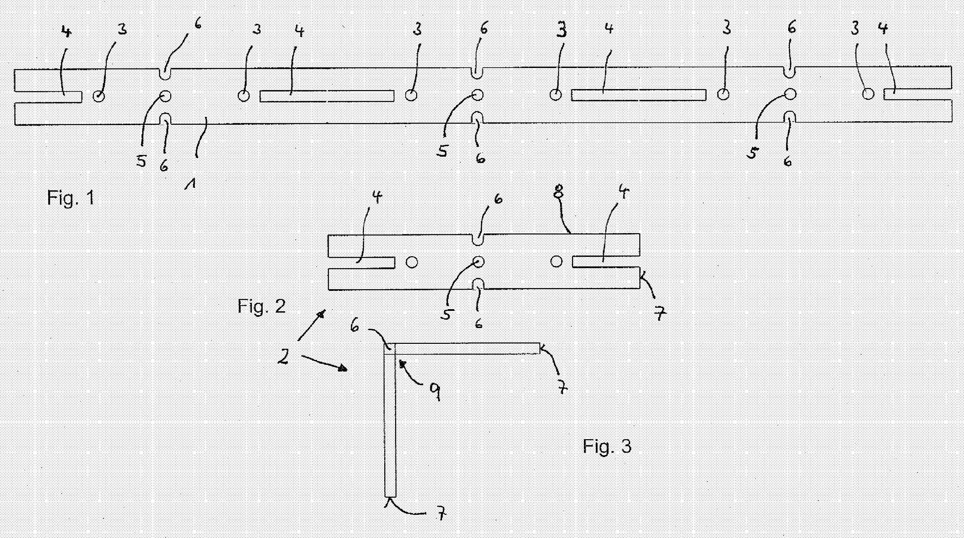

In der Fig. 1 ist das Halbzeug 1 zur Herstellung des Deckwinkels 2 (Fig. 2) dargestellt. Das Halbzeug 1 ist aus einem stabförmigen flachen Metallstreifen durch Stanzen hergestellt. Die in dem Deckwinkel 2 zur Funktion des daraus hergestellten Beschlagteils benötigten Bohrungen 3 und Ausnehmungen 4 sind dabei ebenso wie Bohrungen 5 und Ausnehmungen 6, die der Herstellung des Deckwinkels 2 dienen, bereits eingebracht.

So dienen die Bohrungen 3 der Befestigung von weiteren Einzelteilen an dem Deckwinkel 2. Die Ausnehmungen 4 sind zur Aufnahme von verschiebbaren Arretierplatten nach der DE 36 37 317 C2 vorgesehen und liegen endseitig an dem Deckwinkel 2.

Das in der Fig. 1 dargestellte Halbzeug 1 beinhaltet drei Deckwinkel 2, die im Bereich der Ausnehmungen 4 voneinander getrennt werden. Dadurch wird die Fläche an den Stirnseiten 7, die keine galvanische Beschichtung hat, minimiert. Gleichzeitig wird der Querschnitt, der zur Herstellung der Deckwinkel 2 aus dem Halbzeug 1 durchtrennt werden muss, reduziert. Es kann abweichend von der Darstellung nach den Fig. 1 und 2 daher noch vorgesehen werden, dass im vorgesehenen Endbereich des Deckwinkels 2 an dessen Außenlängskante 8 eine weitere Ausnehmung vorgesehen ist.

In dem Eckbereich 9 des winkelförmigen Deckwinkels 2 ist die randoffene Ausnehmung 6 vorgesehen. Diese dient zum einen dazu, ein seitliches Ausbeulen der Außenlängskante 8 beim Biegen zu vermeiden und zum anderen der Erleichterung des Biegevorgangs an sich. In dem Eckbereich 9 ist dabei noch die Bohrung 5 vorgesehen, die zum einen ebenfalls dazu dient, den Biegevorgang zu erleichtern und zum anderen auch hilft, ein Aufreißen der Oberfläche des Deckwinkels 2 im äußeren Eckbereich 9 zu vermeiden. Die Bohrung 5 erlaubt es dem Material an dem engen Biegeradius nach innen auszuweichen, so dass keine Aufwerfungen entstehen. An der Außenseite wird das Fließen des Materials erleichtert, so dass eine Rissbildung vermieden werden kann.

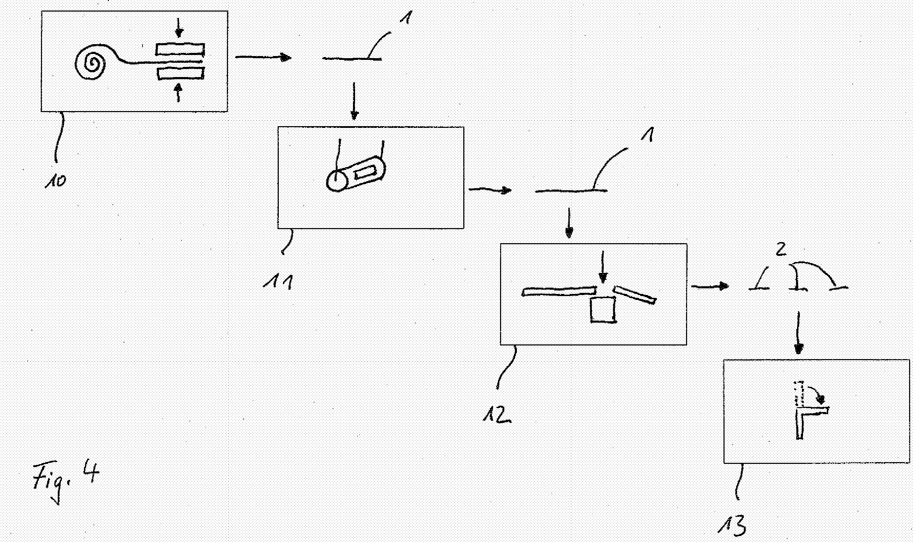

Die Herstellung des Deckwinkels 2 ist in der Fig. 4 schematisch dargestellt. In dem skizzierten Verfahren wird in einem ersten Arbeitsschritt 10 zunächst das Halbzeug 1 (Fig. 1) aus einem Coil durch Stanzen und/oder Biegen vorgefertigt. Das so hergestellte Halbzeug 1 wird in dem zweiten Arbeitsschritt 11 in einer Trommel galvanisiert. Schließlich wird das galvanisierte Halbzeug einem dritten Arbeitsschritt 12 zugeführt, in dem durch ein Trennwerkzeug von dem Halbzeug 1 die noch gestreckten Deckwinkel 2 abgeteilt werden. In einem letzten Arbeitsschritt 13 werden diese stangenförmigen Deckwinkel 2 zu einem Winkel gebogen und können ggf. weiteren Bearbeitungsschritten zugeführt werden.

Das vorstehend beschriebene Halbzeug 1 eignet sich zur Herstellung von Deckwinkeln 2 von Eckumlenkungen. Selbstverständlich ist die Erfindung auch mit Eckwinkeln von Gelenkbändern usw. verwendbar, da hier die gleichen Vorteile eintreten. Der Fertigungsablauf kann neben den beschriebenen Arbeitsschritten 10, 11, 12 und 13 auch noch weitere Zwischenschritte umfassen, welche die eigentliche Gestalt des Deckwinkels 2 nicht beeinflussen. So kann es beispielsweise Sinn machen, vor dem Trennen der Deckwinkel 2 im Arbeitsschritt 12 an dem Halbzeug 1 Anbauteile wie Führungsstücke o.ä. in der dem Deckwinkel 2 entsprechenden Anzahl anzubringen. Durch die noch zu einem gemeinsamen Halbzeug 1 verbundenen Deckwinkel 2 wird die Handhabung erleichtert, da nur noch ein Bauteil zugeführt werden muss.

Es kann abweichend von der Fig. 1 auch noch vorgesehen werden, dass an dem Halbzeug 1 ein oder mehrere Abfallstücke vorgesehen werden, die z.B. endseitig an dem Halbzeug 1 angebracht sind. Diese für die Funktion des Deckwinkels 2 nicht notwendigen Abschnitte können beispielsweise abgewinkelte Enden kurzer Länge aufweisen, die eine Lagezuordnung ermöglichen. Dadurch ist die manuelle und automatische Zuführung der Halbzeuge 1 und/oder der Deckwinkel 2 in Fertigungseinrichtungen möglich.

Obgleich das dargestellte Ausführungsbeispiel die Erfindung an einem winkelförmigen Montage- oder Deckwinkel 2 zeigt ist leicht ersichtlich, dass die Erfindung auch bei einem stabförmigen Bauteil, wie z.B. einer Deckschiene oder einer Treibstange mit Vorteil anwendbar ist. Auch wenn die winkelförmigen Montage- oder Deckwinkel 2 in einem Gestell beschichtet werden sollen, ist die Erfindung noch vorteilhaft, da sich die Anzahl der zu handhabenden Bauteile drastisch reduziert. Das entsprechende Halbzeug 1 wird zunächst wie vorstehend beschrieben aus einem stabförmigen Metallstreifen durch Stanzen hergestellt. Die Beschichtung erfolgt dann aber abweichend von dem vorstehend beschriebenen Vorgehen in einem Gestell, wobei jedes Halbzeug einzeln aufgehangen bzw. befestigt wird. Nach dem Beschichten erfolgt die weitere Verarbeitung wie bereits vorstehend beschrieben.

### Bezugszeichenliste

- 1: Halbzeug
- 2: Deckwinkel
- 3: Bohrung
- 4: Ausnehmung
- 5: Bohrung
- 6: Ausnehmung
- 7: Stirnfläche
- 8: Außenlängskante
- 9: Eckbereich
- 10: Arbeitsschritt
- 11: Arbeitsschritt
- 12: Arbeitsschritt
- 13: Arbeitsschritt

## Patentansprüche

1. Verfahren zur Herstellung eines winkelförmigen Deckwinkels (2) aus Stahl mit einem galvanischen Überzug für ein Beschlagteil,
**gekennzeichnet durch** die Arbeitschritte
a) Herstellen eines Halbzeuges (1) **durch** Stanzen und/oder Biegen aus einem stabförmigen Bandmaterial, wobei das Halbzeug (1) zumindest zur Herstellung von zwei Deckwinkel (2) ausreicht,
b) Galvanisieren der stabförmigen Halbzeuge (1) in einer Trommel,
c) Zuführen der Halbzeuge (1) an eine Vorrichtung, an der die Deckwinkel (2) voneinander getrennt und nachfolgend abgewinkelt werden.

## Claims

1. Method of manufacturing an angular sash angle cover element (2) made of steel, with a galvanic coating for a fitting element,
**characterized by** the method steps
a) Manufacturing a semi-finished product (1) by punching and/or bending from a rod-shaped strip material, wherein the semi-finished product (1) is adequate for the manufacture of two angle cover elements (2),
b) Galvanizing of the rod-shaped semi-finished products (1) in a drum,
c) Delivering the semi-finished products (1) to a device at which the angle cover elements (2) are separated from each other and are then formed to an angle.

## Revendications

1. Procédé de fabrication d'un élément de recouvrement angulaire (2) en acier, pourvu d'un revêtement galvanisé, pour un composant de ferrure,
**caractérisé par** les étapes suivantes :
a) fabrication d'un semi-produit (1) par découpage et / ou par pliage à partir d'une bande de matériau en forme de barre, sachant que le semi-produit (1) suffit à fabriquer au moins deux éléments de recouvrement angulaires (2),
b) galvanisation du semi-produit (1) en forme de barre dans un tambour,
c) conduite du semi-produit (1) à un dispositif, dans lequel les éléments de recouvrement angulaires (2) sont séparés les uns des autres et ensuite coudés.
